# EUROPÄISCHE PATENTSCHRIFT

(11) **EP 0 890 215 B1**
(45) Veröffentlichungstag und Bekanntmachung des Hinweises auf die Patenterteilung: **22.10.2003**
(21) Anmeldenummer: 97920551.5
(22) Anmeldetag: 27.03.1997
(51) Int. Cl.: H02M 3/07

(54) **SCHALTUNGSANORDNUNG ZUR VERSORGUNG EINES ELEKTRONISCHES LASTKREISES**
POWER SUPPLY CIRCUIT ARRANGEMENT FOR AN ELECTRONIC LOAD CIRCUIT
MONTAGE D'ALIMENTATION POUR UN CIRCUIT DE CHARGE ELECTRONIQUE

(30) Priorität: 28.03.1996 DE 19612443
(43) Veröffentlichungstag der Anmeldung: 13.01.1999
(73) Patentinhaber: Infineon Technologies AG, 81669 München (DE)
(72) Erfinder: VIEHMANN, Hans-Heinrich, D-81739 München (DE)
(74) Vertreter: Epping, Wilhelm, Dipl.-Ing.
(86) Internationale Anmeldenummer: DE9700625
(87) Internationale Veröffentlichungsnummer: WO97037424

(56) Entgegenhaltungen:
- EP-A- 0 350 462
- FR-A- 2 724 468
- US-A- 4 236 199
- US-A- 5 414 614

## Beschreibung

Die Erfindung bezieht sich auf eine Schaltungsanordnung zur Versorgung eines elektronischen Lastkreises mit einer elektrischen Hochspannung nach dem Oberbegriff des Anspruches 1.

Eine derartige Schaltungsanordnung ist aus der US-A-5 446 697 bekannt geworden.

Eine weitere Schaltungsanordnung zur Regulierung der Ausgangsspannung eines Spannungsmultiplizierers ist aus der US-A-5394372 bekannt.

Für elektrisch programmierbare und löschbare Halbleiterspeicher werden zum Programmieren und Löschen Spannungen benötigt, welche die in den meisten Fällen übliche Versorgungsspannung betragsmäßig überschreiten. Die Speicherzellen elektrisch programmierbarer und löschbarer Halbleiterspeicher sind üblicherweise aus zwei extern ansteuerbaren Elektroden und einer dazwischenliegenden potentialungebundenen Elektrode aufgebaut. Das Programmieren solcher Speicherzellen erfolgt durch Aufbringen von Ladungen auf die potentialungebundene Elektrode durch Anlegen einer Hochspannung zwischen den beiden extern ansteuerbaren Elektroden, welche typischerweise etwa +18 Volt beträgt, das Löschen erfolgt durch Entfernen von Ladungen von der potentialungebundenen Elektrode durch Anlegen einer Hochspannung, welche ein gegenüber der Programmierspannung entgegengesetzes Vorzeichen aufweist und typischerweise etwa -12 Volt beträgt. Wichtige Einsatzgebiete elektrisch programmierbarer und löschbarer Halbleiterspeicher sind neben den elektronischen Datenverarbeitungsanlagen insbesondere elektronischen Karten, wie beispielsweise Speicherkarten und Mikroprozessorkarten. In diesen Fällen wird dabei die Versorgungsspannung extern von einem sogenannten Terminal während eines Datenaustausches zwischen der elektronischen Karte und dem Terminal zugeführt. Im Bereich der TTL-Technologie mit aus bipolaren Transistoren aufgebauten integrierten Halbleiterbauelementen beträgt die Versorgungsspannung üblicherweise 5 Volt ± 10 %, während im Bereich der CMOS-Technologie mit Feldeffekttransistoren aufgebauten integrierten Halbleiterbauelementen Werte von typischerweise 3 Volt ± 10 % üblich sind. Für die genannten Einsatzgebiete von elektrisch programmierbaren und löschbaren Halbleiterspeichern ist es daher wünschenswert, eine Hochspannungserzeugungsschaltung für Spannungen beider Vorzeichen zur Verfügung zu stellen, welche sowohl mit einer Versorgungsspannung von etwa 3 Volt, als auch mit einer Versorgungsspannung von etwa 5 Volt arbeitet.

Der vorliegenden Erfindung liegt die Aufgabe zugrunde, die Schaltungsanordnung der Eingangs genannten Gattung dergestalt zu verbessern, dass die von der Pumpschaltung abgegebene Pumpleistung von dem Lastkreis wenigstens annähernd konstant betreibbar ist.

Diese Aufgabe wird durch eine Schaltungsanordnung nach Anspruch 1 gelöst.

Es ist vorgesehen, daß die Schaltungsanordnung eine der Pumpschaltung zugeordnete, mit einer wenigstens aus der Versorgungsspannung der Pumpschaltung abgeleiteten Spannung versorgte elektronische Steuerschaltung aufweist, die in Abhängigkeit eines vom Wert der Versorgungsspannung abhängigen Steuersignales ein auf die Pumpfrequenz zur Erzeugung der von der Pumpschaltung abgegebenen Hochspannung wirkendes Schaltsignal an die Pumpschaltung derart abgibt, daß der Wert der Pumpfrequenz des Schaltsignales sich umgekehrt zum Wert der Versorgungsspannung verhält. Der Erfindung liegt die Erkenntnis zugrunde, die Abhängigkeit der an den Lastkreis abgegebenen Pumpleistung vom Produkt aus der Versorgungsspannung und der Pumpfrequenz solchermaßen auszunutzen, daß zur Abgabe einer möglichst konstanten Pumpleistung auch bei unterschiedlichen Versorgungsspannungen die Pumpfrequenz so gesteuert wird, daß sie mit einer Abnahme der Versorgungsspannung ansteigt. Der schaltungstechnische Aufwand ist erfindungsgemäß dabei verhältnismäßig gering, da lediglich ein einziges, dem Wert der Versorgungsspannung entsprechendes Steuersignal zur Steuerung der Pumpfrequenz erforderlich ist. Die Pumpfrequenz kann somit ausschließlich in Abhängigkeit vom Wert der Versorgungsspannung gesteuert werden. Andere Größen, wie beispielsweise die Leistungsabgabe der Pumpschaltung oder die Leistungsaufnahme des Lastkreises, besitzen keinen wesentlichen Einfluß auf die Pumpfrequenz, so daß weitere Signale zur Steuerung der Pumpfrequenz, die von anderen Größen als der Versorgungsspannung abhängig sind, nicht erforderlich sind.

Bei einer bevorzugten Ausbildung der erfindungsgemäßen Schaltungsanordnung, kann vorgesehen sein, daß die Pumpschaltung vermittels des Steuersignales der Steuerschaltung zur Abgabe einer wenigstens annähernd konstanten Pumpleistung an den Lastkreis gesteuert ist, wobei die Abgabe der Pumpleistung der Pumpschaltung vermittels der Steuerschaltung im wesentlichen proportional zum Produkt aus dem Versorgungsspannungswert und der Pumpfrequenz gesteuert ist. Um die Pumpleistung der Pumpschaltung auf einem konstanten Wert zu halten, kann vorgesehen sein, die Pumpfrequenz derart durch den Wert der Versorgungsspannung zu steuern, daß der Einfluß des Versorgungsspannungswertes auf die Pumpleistung kompensiert wird.

Unter Berücksichtigung des proportionalen Zusammenhangs zwischen der Pumpleistung einerseits und dem Produkt aus der Versorgungsspannung und der Pumpfrequenz andererseits kann weiterhin vorgesehen sein, daß die Abgabe der Pumpleistung der Pumpschaltung vermittels der Steuerschaltung in Abhängigkeit von dem Versorgungsspannungswert derart gesteuert ist, daß die Pumpfrequenz indirekt proportional zum Versorgungsspannungswert ist. Bei einer Pumpschaltung mit der Pumpleistung P = c*U*f, wobei P die Pumpleistung, c einen idealerweise konstanten Faktor, U die Versorgungsspannung und f die Pumpfrequenz darstellen, würde idealerweise eine Steuerschaltung, welche die Pumpfrequenz f gemäß des Zusammenhangs f = d/U steuert, wobei d eine ideale Konstante darstellt, die Pumpleistung auf einem konstanten Wert halten. Für die Abhängigkeit der Pumpfrequenz ergibt sich dann damit: P = c*d. Bei einer derartigen Steuerung der Pumpfrequenz, welche indirekt proportional zum Wert der Versorgungsspannung ist, kann die Abhängigkeit der Pumpleistung von der Versorgungsspannung und der Pumpfrequenz kompensiert werden. In realen Schaltungen sind die Konstanten c und d beispielsweise von der Temperatur oder bauelementespezifischen Parametern abhängig. Dieser Einfluß kann, sofern dies für erforderlich gehalten wird, gegebenenfalls durch geeignete schaltungstechnische Maßnahmen kompensiert werden.

Bei einer weiterhin bevorzugten Ausbildung der erfindungsgemäßen Schaltungsanordnung kann vorgesehen sein, daß die Steuerschaltung zur Erzeugung und Ausgabe des Schaltsignales einen Oszillatorschaltkreis aufweist, dessen Oszillatorfrequenz von dem am Eingang des Oszillatorschaltkreises anliegenden Steuersignal gesteuert ist. Bei einer Verwendung des vom Oszillatorschaltkreis erzeugten Signals als Schaltsignal für die Pumpschaltung ist die Pumpfrequenz proportional zur Oszillatorfrequenz, wodurch die Pumpfrequenz in Abhängigkeit des Steuersignales gesteuert wird.

Um einen indirekt proportionalen Zusammenhang zwischen dem Versorgungsspannungswert und der Pumpfrequenz zu erreichen, kann erfindungsgemäß vorgesehen sein, daß das am Eingang des Oszillatorschaltkreises anliegende Steuersignal unmittelbar aus dem Versorgungsspannungswert abgeleitet ist. Dadurch wird der Wert der Pumpfrequenz direkt durch den Wert der Versorgungsspannung gesteuert.

In näherer Ausgestaltung der erfindungsgemäßen Schaltungsanordnung kann vorgesehen, daß der Oszillatorschaltkreis einen Schmitt-Trigger-Schaltkreis aufweist. Die Frequenz eines Oszillatorschaltkreises mit einem Schmitt-Trigger-Schaltkreis kann auf einfache Weise von nur einer Spannung gesteuert werden, wodurch die erfindungsgemäße Schaltungsanordnung mit einem relativ geringen schaltungstechnischen Aufwand ausgebildet werden kann.

Zur weiteren Verarbeitung der vom Oszillatorschaltkreis ausgegebenen Signale kann von Vorteil vorgesehen sein, daß die der Pumpschaltung zugeordnete Steuerschaltung einen dem Oszillatorschaltkreis nachgeschalteten Frequenzteiler aufweist, welcher zwei zueinander antisymmetrische Taktsignale auf die beiden Pumpeingänge der Pumpschaltung schaltet. Für eine einwandfreie Funktion der Pumpschaltung kann von Vorteil vorgesehen sein, zwei zueinander inverse Taktsignale zur Verfügung zu stellen, deren hohe und niedrige Pegel die gleiche zeitliche Länge aufweisen; solche Taktsignale können mittels des Frequenzteilers der erfindungsgemäßen Schaltungsanordnung in verhältnismäßig einfacher Weise vorgesehen werden. Der Frequenzteiler kann beispielsweise durch einfache Gatterschaltungen aufgebaut sein, welche in den meisten gängigen Halbleitertechnologien, wie zum Beispiel in der TTL- oder CMOS-Bauweise zur Verfügung stehen.

In einer weiterhin bevorzugten Ausführung der Erfindung kann vorgesehen sein, daß die Pumpschaltung eine aus mehreren Stufen mit Kondensatoren und als Dioden arbeitenden Transistoren zusammengesetzte Kaskadenschaltung aufweist, wobei die Stufen der Kaskadenschaltung derart in einer Reihenschaltung zwischen dem Hochspannungsausgang und der Versorgungsspannung verbunden sind, daß die als Dioden arbeitenden Transistoren in Reihe geschaltet sind, die an die Koppelpunkte der als Dioden arbeitenden Transistoren gekoppelten Kondensatoren wechselweise mit der den als Dioden arbeitenden Transistoren abgewandten Seite an die beiden Pumpeingänge gekoppelt sind, und daß die Pumpschaltung einen weiteren, zwischen Versorgungsspannung und der aus den Transistoren zusammengesetzten Reihenschaltung geschalteten, mit dem Steuereingang an der Versorgungsspannung liegenden, rückgekoppelten, als Diode arbeitenden Transistor aufweist. Durch die Verwendung von als Dioden arbeitenden, rückgekoppelten Transistoren insbesondere in der CMOS-Technologie kann der Flächenbedarf auf dem Halbleitersubstrat gering gehalten werden. Eine derartige Pumpschaltung läßt sich in den meisten gängigen Halbleitertechnologien, wie zum Beispiel in der TTL- oder CMOS-Bauweise realisieren, was eine vollständige Integrationsmöglichkeit auf einem Halbleitersubstrat sicherstellt.

Zur Gewährleistung einer möglichst kompakten Bauweise kann von Vorteil vorgesehen sein, daß die Schaltungsanordnung gemeinsam mit dem Lastkreis auf einem Halbleitersubstrat integriert ausgebildet ist. Der Oszillatorschaltkreis, der Frequenzteiler und auch die Kaskadenschaltung lassen sich in derselben Halbleitertechnologie realisieren, so daß eine Fertigung von monolithischen Schaltungsbestandteilen auf einem einzigen Halbleitersubstrat möglich ist.

Bei einer besonders bevorzugten Anwendung der erfindungsgemäßen Steuerschaltung kann vorgesehen sein, daß der elektronische Lastkreis eine Gruppe von zu programmierenden oder zu löschenden Speicherzellen eines nichtflüchtigen elektrisch löschbaren, programmierbaren Halbleiterspeichers aufweist. In diesem Fall kann von Vorteil vorgesehen sein, daß der Wert der Hochspannung vorzugsweise etwa +18 Volt oder -12 Volt, und der Wert der Versorgungsspannung vorzugsweise zwischen etwa +3 Volt - 10 % bis +5 Volt + 10 % beträgt.

Zur Verringerung des schaltungstechnischen Aufwandes kann ferner vorgesehen sein, daß der Wert des Steuersignales unmittelbar dem Wert der Versorgungsspannung entspricht. Demgegenüber hätte eine Transformationsschaltung zwischen der Versorgungsspannung und dem Steuersignal möglicherweise eine nichtlineare Übertragungsfunktion zwischen Steuersignal und Versorgungsspannung zur Folge, was eine Störung des indirekt proportionalen Zusammenhangs zwischen der Pumpfrequenz und der Versorgungsspannung bewirken könnte.

Weitere Merkmale, Vorteile und Zweckmäßigkeiten der Erfindung ergeben sich aus der nachfolgenden Beschreibung eines Ausführungsbeispieles anhand der Zeichnung. Es zeigt:
- Figur 1: einen schematischen Aufbau einer erfindungsgemäßen Schaltungsanordnung;
- Figur 2: einen schematischen Aufbau eines Schmitt-Trigger-Oszillatorschaltkreises; und
- Figur 3: den zeitlichen Verlauf einiger Spannungen der erfindungsgemäßen Schaltungsanordnung.

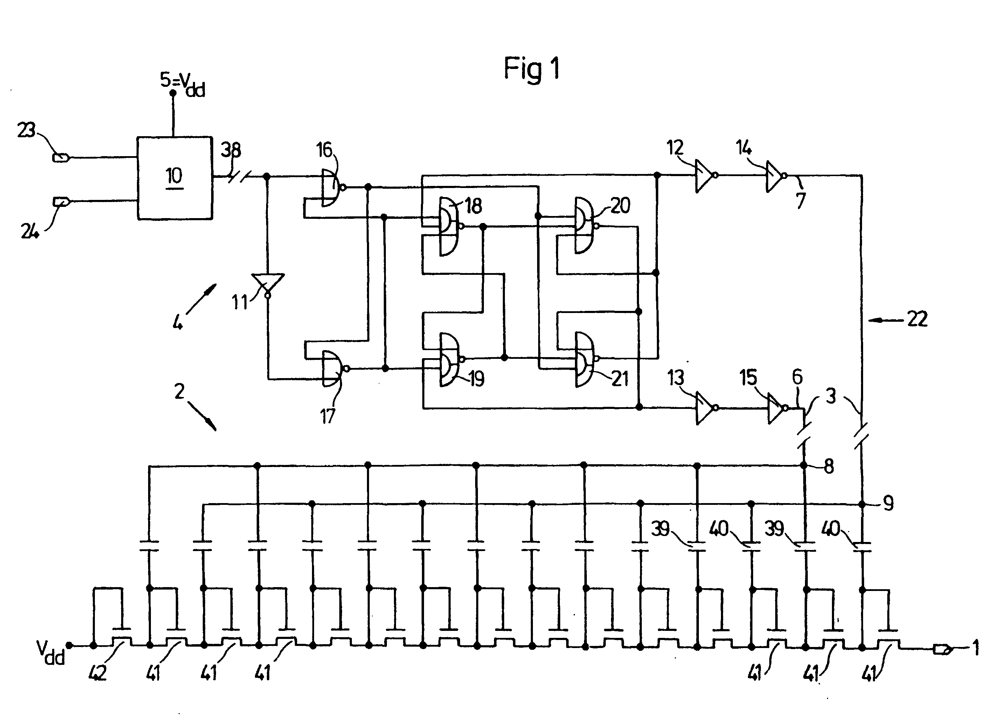

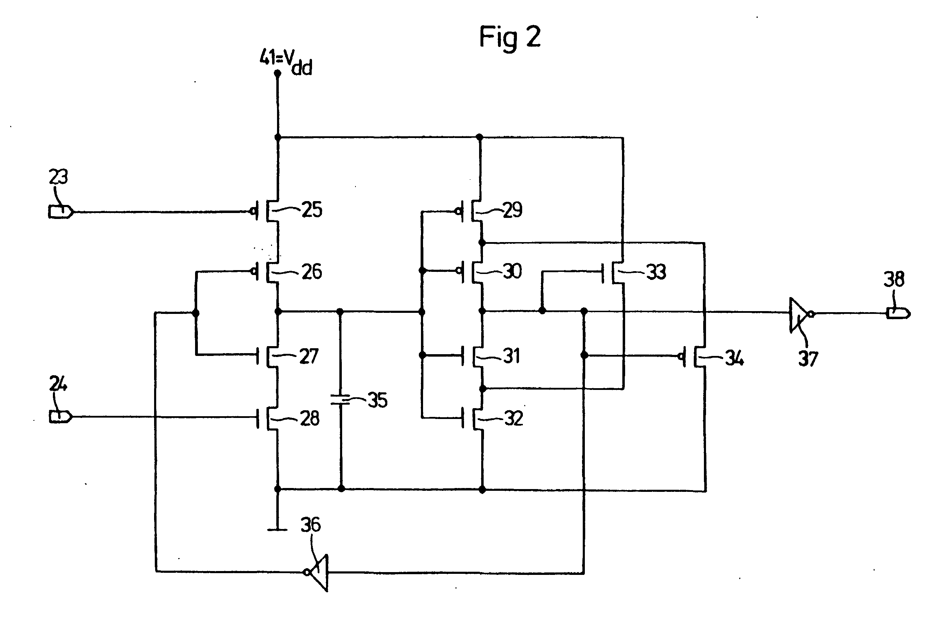

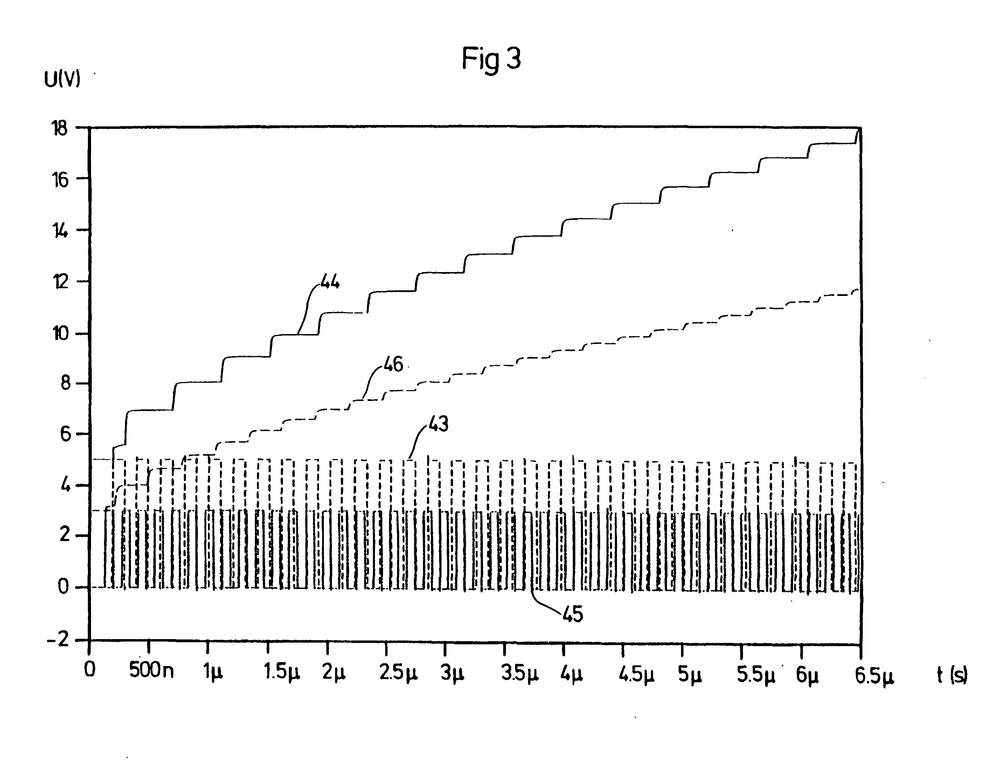

Figur 1 zeigt ein Ausführungsbeispiel der erfindungsgemäßen Schaltungsanordnung zur Versorgung eines am Hochspannungsausgang 1 anliegenden, in Figur 1 nicht näher dargestellten elektronischen Lastkreises mit einer elektrischen Hochspannung, dessen Wert betragsmäßig größer ist als der Wert einer die Schaltungsanordnung versorgende Versorgungsspannung V_{dd}. Der Lastkreis kann vorzugsweise Speicherzellen eines in einer elektronischen Speicherkarte oder Mikroprozessorkarte vorgesehenen elektrisch programmierbaren und löschbaren Halbleiterspeichers darstellen. Die Schaltungsanordnung weist eine mit dem Lastkreis verbundene Pumpschaltung 2 auf, die auf der Grundlage eines internen Schaltsignales 3 mit vorbestimmter Pumpfrequenz eine Hochspannung von typischerweise +18 Volt über den Hochspannungsausgang 1 derart an den Lastkreis ausgibt, daß die von dem Lastkreis aufgenommene elektrische Pumpleistung der Pumpschaltung 2 im wesentlichen sowohl von dem Wert der Versorgungspannung V_{dd}, als auch dem Wert der Pumpfrequenz des Schaltsignales 3 der Pumpschaltung 2 abhängt. Die Schaltungsanordnung weist eine der Pumpschaltung 2 zugeordnete, mit einer aus der Versorgungsspannung V_{dd} der Pumpschaltung 2 abgeleiteten Spannung versorgten elektronischen Steuerschaltung 4 auf, die in Abhängigkeit eines vom Wert der Versorgungsspannung V_{dd} abhängigen Steuersignales 5 das auf die Pumpfrequenz des zur Erzeugung der von der Pumpschaltung 2 abgegebenen Hochspannung wirkende Schaltsignal 3 an die Pumpschaltung 2 derart abgibt, daß der Wert der Pumpfrequenz des Schaltsignales 3 sich umgekehrt zum Wert der Versorgungsspannung V_{dd} verhält. Die Steuerschaltung 4 und die Pumpschaltung 2 sind über Steuerausgänge 6, 7 der Steuerschaltung 4 und Pumpeingänge 8, 9 der Pumpschaltung 2 miteinander gekoppelt. Bei dem Ausführungsbeispiel nach Figur 1 stellt das Steuersignal 5 der Steuerschaltung 4 unmittelbar die Versorgungsspannung V_{dd} der Schaltungsanordnung dar. Die Steuerschaltung 4 weist einen Schmitt-Trigger-Oszillator 10 und einen dem Schmitt-Trigger-Oszillator 10 nachgeschalteten, aus Gatterschaltungen 11 bis 21 aufgebauten Frequenzteiler 22 auf. Unter bezugnahme auf Figur 2 besitzt der Öszillatorschaltkreis 10 einen ersten Referenzspannungseingang 23 und einen zweiten Referenzspannungseingang 24, an welche zwei konstante Referenzspannungen zur Justierung der Schaltungsanordnung anliegen. Der Oszillatorschaltkreis 10 weist ferner eine Reihenschaltung aus vier Transistoren 25 bis 28, zwei p-Kanal-Feldeffekttransistoren 25, 26 und zwei n-Kanal-Feldeffekttransistoren 27, 28, auf, welche zwischen der Versorgungsspannung V_{dd} und dem Masseanschluß geschaltet ist. Parallel dazu ist eine zweite Reihenschaltung aus vier Transistoren 29 bis 32, zwei p-Kanal-Feldeffekttransistoren 29, 30 und zwei n-Kanal-Feldeffekttransistoren 31, 32, geschaltet. Der Steuereingang des Transistors 25 ist an den ersten Referenzspannungseingang 23, und der Steuereingang des Transistors 28 an den zweiten ersten Referenzspannungseingang 24 gekoppelt. Die Steuereingänge der Transistoren 26, 27 sind miteinander verbunden. Die Steuereingänge der Transistoren 29 bis 32 sind miteinander gekoppelt und mit dem Koppelpunkt der beiden Elektroden der Transistoren 26, 27 verbunden. Parallel zu den Transistoren 26, 27 ist ferner ein Kondensator 35 geschaltet. Parallel zu den Transistoren 29 bis 31 ist ein p-Kanal-Feldeffekttransistor 33 geschaltet. Parallel zu den Transistoren 30 bis 32 ist ein n-Kanal-Feldeffekttransistoren 34 geschaltet. Die Steuereingänge der Transistoren 33, 34 sind mit dem Koppelpunkt der Elektroden der Transistoren 30, 31 und mit den Eingängen zweier NICHT-Gatter 36, 37 verbunden. Der Ausgang des NICHT-Gatters 36 ist mit dem gemeinsamen Steueranschluß der Transistoren 26, 27 verbunden. Der Ausgang des NICHT-Gatters 37 entspricht dem Ausgang 38 des Oszillatorschaltkreises 10. Der Oszillatorschaltkreis 10 ist über den Oszillatorausgang 38 mit dem Frequenzteiler 22 gekoppelt. Der aus den Gattern 11 bis 21 gebildete Frequenzteiler 22 weist fünf NICHT-Gatter 11 bis 15, zwei negierte ODER-Gatter 16, 17 und vier mit jeweils einem integrierten UND-Gatter vorgeschaltete negierte ODER-Gatter 18 bis 21 auf, die in der aus Figur 1 ersichtlichen Weise verschaltet sind. Der erste und zweite Steuerausgang 6, 7 der Steuerschaltung 4 sind zur Zuführung des Schaltsignals 3 an die Pumpschaltung 2 mit dem ersten bzw. zweiten Pumpeingang 8, 9 gekoppelt. Die aus vierzehn Kondensatoren 39, 40 und fünfzehn Transistoren 40, 41 aufgebaute Pumpschaltung 2 stellt eine aus vierzehn Stufen mit jeweils einem Kondensator 39, 40 und einem als Diode arbeitenden Transistor 41 zusammengesetzte Kaskadenschaltung dar, die gemäß der Darstellung nach Figur 1 verschaltet sind. Die Stufen der Kaskadenschaltung sind hierbei derart in einer Reihenschaltung zwischen dem Hochspannungsausgang 1 und der Versorgungsspannung V_{dd} verbunden, daß die als Dioden arbeitenden Transistoren 41 eine Reihenschaltung bilden, die an die Steuereingänge der als Dioden arbeitenden Transistoren 41 gekoppelten Kondensatoren 39, 40 wechselweise mit der den Transistoren 41 abgewandten Seite an die beiden Pumpeingänge 8, 9 gekoppelt sind, wobei die geradzahligen Kondensatoren 39 an den Pumpeingang 8, und die ungeradzahligen Kondensatoren 40 an den Pumpeingang 9 angeschlossen sind. Die Pumpschaltung 2 weist einen weiteren, zwischen der Versorgungsspannung V_{dd} und der aus den Transistoren 41 zusammengesetzten Reihenschaltung geschalteten, mit dem Steuereingang an der Versorgungsspannung V_{dd} liegenden, rückgekoppelten und als Diode arbeitenden Transistor 42 auf. In Figur 3 sind vier Diagramme 43 bis 46 dargestellt, welche den zeitlichen Verlauf einiger Spannungen der in den Figuren 1 und 2 dargestellten Schaltungsanordnung zeigen. Die erste Kurve 43 zeigt das bei einer Versorgungsspannung V_{dd} = 5 Volt das vom Oszillatorschaltkreis 10 erzeugte, am Ausgang 38 anliegende Taktsignal, und die zweite Kurve 44 zeigt die gleichzeitig am Hochspannungsausgang 1 anliegende Hochspannung. Analog dazu zeigen die Kurven 45 und 46 das am Ausgang 38 anliegende Taktsignal bzw. die am Hochspannungsausgang 1 anliegende Hochspannung bei einer Versorgungsspannung V_{dd} = 3 Volt.

Die Funktionsweise der in den Figuren 1 und 2 dargestellten Schaltungsanordnung wird im folgenden und anhand der in Figur 3 gezeigten Spannungsverläufe näher erläutert. Der Schmitt-Trigger-Oszillator 10 erzeugt an seinem Ausgang 38 ein Rechtecksignal 45, 46, dessen Frequenz indirekt proportional zum Steuersignal 5 gesteuert ist, welches mit dem Wert der Versorgungsspannung V_{dd} der Schaltungsanordnung identisch ist. Durch die an den Referenzspannungseingängen 23, 24 anliegenden Referenzspannungen arbeitet die in Figur 2 dargestellte, aus den Transistoren 25 bis 28 gebildete Reihenschaltung als Stromquelle, deren Strom der Versorgungsspannung V_{dd} proportional ist. Die durch das-NICHT-Gatter 36 rückgekoppelte Reihenschaltung der Transistoren 29 bis 31 und der Kondensator 35 bilden einen Schwingkreis und erzeugen Oszillationen, welche durch das NICHT-Gatter 37 zu Rechtecksignalen geformt und über den Ausgang 38 dem Frequenzteiler 22 zugeführt werden. Ein Vergleich der Kurven 43 und 45, welche die Taktsignale am Oszillatorausgang 38 bei Versorgungsspannungen V_{dd} von 5 Volt bzw. 3 Volt darstellen, zeigt den annähernd indirekt proportionalen Zusammenhang zwischen der Versorgungsspannung V_{dd} und der Taktfrequenz am Oszillatorausgang 38. Der dem Schmitt-Trigger-Oszillator 10 nachgeschaltete Frequenzteiler 22 verarbeitet das am Ausgang 38 anliegende Signal derart, daß das Schaltsignal 3 aus zwei an den Steuerausgängen 6, 7 und damit an den Pumpeingängen 8, 9 anliegenden, stets zueinander inversen Rechtecksigalen besteht. Die Pumpschaltung 2 verarbeitet das an den Pumpeingängen 8, 9 anliegende Schaltsignal 3 zu einer am Hochspannungsausgang 1 anliegenden Hochspannung. Die Kurven 44 und 46 verdeutlichen die von der Pumpschaltung 2 mit halber Frequenz des am Oszillatorausgang 38 anliegenden entsprechenden Taktsignales paketweise durchgeführten Erhöhungen der am Hochspannungsausgang 1 anliegenden Hochspannung, deren Anfangswerte die jeweiligen Versorgungsspannungen V_{dd} von 5 Volt und 3 Volt sind. In beiden Fällen erhöht sich der Wert der Hochspannungsausgang 1 anliegenden Hochspannungen nach 2 µs auf den etwa doppelten Wert der jeweiligen Versorgungsspannung V_{dd} und nach weiteren 2 µs auf den etwa dreifachen Wert der jeweiligen Versorgungsspannung V_{dd}, was eine von der Versorgungsspannung V_{dd} nahezu unabhängige Pumpleistung bedeutet.

## Patentansprüche

1. Schaltungsanordnung zur Versorgung eines elektronischen Lastkreises mit einer elektrischen Hochspannung, deren Wert betragsmäßig größer ist als der Wert einer die Schaltungsanordnung versorgenden Versorgungsspannung (V_{dd}), welche Schaltungsanordnung eine elektrisch mit dem Lastkreis verbundene Pumpschaltung (2) aufweist, die auf der Grundlage eines internen Schaltsignales (3) mit einer vorbestimmten Pumpfrequenz die Hochspannung derart an den Lastkreis ausgibt, daß die von dem Lastkreis aufgenommene elektrische Pumpleistung der Pumpschaltung (2) im wesentlichen sowohl von dem Wert der Versorgungsspannung (V_{dd}) als auch dem Wert der Pumpfrequenz des Schaltsignales (3) der Pumpschaltung (2) abhängt, wobei die Schaltungsanordnung eine der Pumpschaltung (2) zugeordnete, mit einer wenigstens aus der Versorgungsspannung (V_{dd}) der Pumpschaltung (2) abgeleiteten Spannung versorgte elektronische Steuerschaltung (4) aufweist, die in Abhängigkeit eines vom Wert der Versorgungsspannung (V_{dd}) abhängigen Steuersignales (5) ein auf die Pumpfrequenz zur Erzeugung der von der Pumpschaltung (2) abgegebenen Hochspannung wirkendes Schaltsignal (3) an die Pumpschaltung (2) derart abgibt, daß der Wert der Pumpfrequenz des Schaltsignales (3) sich umgekehrt zum Wert der Versorgungsspannung (V_{dd}) verhält, wobei die Steuerschaltung (4) zur Erzeugung und Ausgabe des Schaltsignales (3) einen Oszillatorschaltkreis 10 aufweist, dessen Oszillatorfrequenz von dem am Eingang des Oszillatorschaltkreises (10) anliegenden Steuersignal (5) das als einziges Steuersignal zur Steuerung der Pumpfrequenz notwendig ist, gesteuert ist, **dadurch gekennzeichnet, daß** das am Eingang des Oszillatorschaltkreises 10 anliegende Steuersignal (5) unmittelbar aus dem Versorgungsspannungswert (V_{dd}) abgeleitet ist.

2. Schaltungsanordnung nach Anspruch 1, **dadurch gekennzeichnet, daß** die Pumpschaltung (2) vermittels des Steuersignales (5) der Steuerschaltung (4) zur Abgabe einer wenigstens annähernd konstanten Pumpleistung an den Lastkreis gesteuert ist.

3. Schaltungsanordnung nach Anspruch 1 und 2, **dadurch gekennzeichnet, daß** die Abgabe der Pumpleistung der Pumpschaltung (2) vermittels des Steuerschaltung (4) im wesentlichen proportional zum Produkt aus dem Versorgungsspannungswert (V_{dd}) und der Pumpfrequenz gesteuert ist.

4. Schaltungsanordnung nach Anspruch 1 bis 3, **dadurch gekennzeichnet, daß** die Abgabe der Pumpleistung der Pumpschaltung (2) vermittels der Steuerschaltung (4) in Abhängigkeit von dem Versorgungsspannungswert (V_{dd}) derart gesteuert ist, daß die Pumpfrequenz indirekt proportional zum Versorgungsspannungswert (V_{dd}) ist.

5. Schaltungsanordnung 1 bis 3, **dadurch gekennzeichnet, daß** der Oszillatorschaltkreis (10) einen Schmitt-Trigger-Schaltkreis aufweist.

6. Schaltungsanordnung nach Anspruch 1 bis 4, **dadurch gekennzeichnet, daß** die der Pumpschaltung (2) zugeordnete Steuerschaltung (4) einen dem Oszillatorschaltkreis (10) nachgeschalteten Frequenzteiler (22) aufweist, welcher zwei zueinander antisymmetrische Taktsignale auf die beiden Pumpeingänge (8, 9) der Pumpschaltung (2) schaltet.

7. Schaltungsanordnung nach Anspruch 1 bis 7, **dadurch gekennzeichnet, daß** die Pumpschaltung (2) eine aus mehreren Stufen mit Kondensatoren (41) zusammengesetzte Kaskadenschaltung derart in einer Reihenschaltung zwischen dem Hochspannungsausgang (1) und der Versorgungsspannung (V_{dd}) verbunden sind, daß die als Dioden arbeitenden Transistoren (41) vom eine Reihe bilden, die an die Koppelpunkte der als Dioden arbeitenden Transistoren (41) gekoppelten Kondensatoren (39, 40) wechselweise mit der den als Dioden arbeitenden Transistoren (41) abgewandten Seite an die beiden Pumpeingänge (8, 9) gekoppelt sind, und daß die Pumpschaltung einen weiteren, zwischen Versorgungsspannung (V_{dd}) und der aus den Transistoren (41) zusammengesetzten Reihenschaltung geschalteten, mit dem Steuereingang an der Versorgungsspannung (V_{dd}) liegenden, rückgekoppelten, als Diode arbeitenden Transistor (42) aufweist.

8. Schaltungsanordnung nach Anspruch 1 bis 7, dadurch einem Halbleitersubstrat integriert ausgebildet sind.

9. Schaltungsanordnung nach Anspruch 1 bis 8, **dadurch gekennzeichnet, daß** der elektronische Lastkreis eine Gruppe von zu programmierenden oder zu löschenden Speicherzellen eines nichtflüchtigen elektrisch löschbaren, programmierbaren Halbleiterspeichers aufweist.

10. Schaltungsanordnung nach Anspruch 1 bis 9, **dadurch gekennzeichnet, daß** der Wert des Steuersignales (5) dem Wert der Versorgungsspannung (V_{dd}) entspricht.

11. Schaltungsanordnung nach Anspruch 1 bis 10, **dadurch gekennzeichnet, daß** der Wert der Hochspannung vorzugsweise etwa +18 Volt oder -12 Volt, und der Wert der Versorgungsspannung (V_{dd}) vorzugsweise zwischen etwa +3 Volt ± 10 % bis +5 Volt ±10 % beträgt.

## Claims

1. Circuit arrangement for supplying an electronic load circuit with an electrical high voltage, whose value has a magnitude greater than the value of a supply voltage (V_{dd}) which supplies the circuit arrangement, which circuit arrangement has a pump circuit (2) which is electrically connected to the load circuit and outputs the high voltage to the load circuit on the basis of an internal switching signal (3) which has a predetermined pump frequency, in such a way that the electrical pump power, which is taken up by the load circuit, of the pump circuit (2) essentially depends both on the value of the supply voltage (V_{dd}) and on the value of the pump frequency of the switching signal (3) of the pump circuit (2), the circuit arrangement having an electronic control circuit (4) which is assigned to the pump circuit (2), is supplied with a voltage derived at least from the supply voltage (V_{dd}) of the pump circuit (2) and, depending on a control signal (5), which depends on the value of the supply voltage (V_{dd}), emits to the pump circuit (2) a switching signal (3) which acts on the pump frequency for generating the high voltage which is output by the pump circuit (2), in such a way that the value of the pump frequency of the switching signal (3) is inversely proportional to the value of the supply voltage (V_{dd}), the control circuit (4) for generating and outputting the switching signal (3) having an oscillator circuit 10 whose oscillator frequency is controlled by the control signal (5) present at the input of the oscillator circuit (10), which is the only control signal necessary for controlling the pump frequency, **characterized in that** the control signal (5) present at the input of the oscillator circuit 10 is derived directly from the supply voltage value (V_{dd}).

2. Circuit arrangement according to Claim 1, **characterized in that** the pump circuit (2) is controlled by means of the control signal (5) of the control circuit (4) for the purpose of outputting an at least approximately constant pump power to the load circuit.

3. Circuit arrangement according to Claims 1 and 2, **characterized in that** the pump power output of the pump circuit (2) is controlled by means of the control circuit (4) to be essentially proportional to the product of the supply voltage value (V_{dd}) and the pump frequency.

4. Circuit arrangement according to Claims 1 to 3, **characterized in that** the pump power output of the pump circuit (2) is controlled by means of the control circuit (4) as a function of the supply voltage value (V_{dd}) in such a way that the pump frequency is indirectly proportional to the supply voltage value (V_{dd}).

5. Circuit arrangement [lacuna] 1 to 3, **characterized in that** the oscillator circuit (10) has a Schmitt trigger circuit.

6. Circuit arrangement according to Claims 1 to 4, **characterized in that** the control circuit (4) assigned to the pump circuit (2) has a frequency divider (22) which is connected downstream of the oscillator circuit (10) and switches two mutually antisymmetric clock signals to the two pump inputs (8, 9) of the pump circuit (2).

7. Circuit arrangement according to Claims 1 to 7, **characterized in that** the pump circuit (2) [lacuna] a cascade circuit which is composed of a plurality of stages comprising capacitors [lacuna] (41) are connected in a series circuit between the high-voltage output (1) and the supply voltage (V_{dd}) in such a way that the transistors (41) operating as diodes of the [sic] form series, and the capacitors (39, 40) which are coupled to the coupling points of the transistors (41) operating as diodes are alternately coupled to the two pump inputs (8, 9) by that end which is remote from the transistors (41) operating as diodes, and **in that** the pump circuit has a further feedback transistor (42) which is connected between the supply voltage (V_{dd}) and the series circuit composed of the transistors (41), is connected by its control input to the supply voltage (V_{dd}) and operates as a diode.

8. Circuit arrangement according to Claims 1 to 7, [lacuna] in that [lacuna] are formed in an integrated manner [lacuna] a semiconductor substrate.

9. Circuit arrangement according to Claims 1 to 8, **characterized in that** the electronic load circuit has a group of memory cells of a non-volatile electrically erasable and programmable semiconductor memory which are to be programmed or erased.

10. Circuit arrangement according to Claims 1 to 9, **characterized in that** the value of the control signal (5) corresponds to the value of the supply voltage (V_{dd}).

11. Circuit arrangement according to Claims 1 to 10, **characterized in that** the value of the high voltage is preferably about +18 volts or -12 volts, and the value of the supply voltage (V_{dd}) is preferably between about +3 volts ± 10% to +5 volts ± 10%.

## Revendications

1. Montage d'alimentation d'un circuit électronique de charge en une haute tension électrique, dont la valeur est plus grande en valeur absolue que la valeur d'une tension (V_{dd}) d'alimentation alimentant le montage, le montage comprenant un circuit (2) de pompage relié électriquement au circuit de charge et appliquant sur la base d'un signal (3) interne de commutation d'une fréquence de pompage déterminée à l'avance la haute tension au circuit de charge de façon à ce que la puissance électrique de pompage absorbée par le circuit de charge dépende essentiellement à la fois de la valeur de la tension (V_{dd}) d'alimentation et de la valeur de la fréquence de pompage du signal (3) de commutation du circuit (2) de pompage, le montage comprenant un circuit (4) électronique de commande qui est associé au circuit (2) de pompage, qui est alimenté en au moins une tension dérivée de la tension (V_{dd}) d'alimentation du circuit (2) de pompage et qui envoie, en fonction d'un signal (5) de commande dépendant de la valeur de la tension (V_{dd}) d'alimentation, au circuit (2) de pompage un signal (3) de commutation, agissant sur la fréquence de pompage pour produire la haute tension donnée par le circuit (2) de pompage de façon à ce que la valeur de la fréquence de pompage du signal (3) de commutation se comporte à l'inverse de la valeur de la tension (V_{dd}) d'alimentation, le circuit (4) de commande comportant, pour la production et l'émission du signal (3) de commutation, un circuit (10) à oscillateur, dont la fréquence d'oscillateur est commandée par le signal (5) de commande appliqué à l'entrée du circuit (10) à oscillateur, qui est le signal unique de commande nécessaire pour commander la fréquence de pompage, **caractérisé en ce que** le signal (5) de commande appliqué à l'entrée du circuit (10) à oscillateur est dérivé directement de la valeur (V_{dd}) de la tension d'alimentation.

2. Montage suivant la revendication 1, **caractérisé en ce que** le circuit de pompage est commandé au moyen du signal (5) de commande du circuit (4) de commande pour envoyer au circuit de charge une puissance de pompage au moins à peu près constante.

3. Montage suivant les revendications 1 et 2, **caractérisé en ce que** l'envoi de la puissance de pompage du circuit (2) de pompage au moyen du circuit (4) de commande est commandé de manière sensiblement proportionnelle au produit de la valeur (V_{dd}) de la tension d'alimentation par la fréquence de la pompe.

4. Montage suivant l'une des revendications 1 à 3, **caractérisé en ce que** l'envoi de la puissance de pompage du circuit (2) de pompage au moyen du circuit (4) de commande est commandé en fonction de la valeur (V_{dd}) de la tension d'alimentation de façon à ce que la fréquence de pompage soit inversement proportionnelle à la valeur (V_{dd}) de la tension d'alimentation.

5. Montage suivant l'une des revendications 1 à 3, **caractérisé en ce que** le circuit (10) à oscillateur comprend un circuit à dispositif de déclenchement de Schmitt.

6. Montage suivant l'une des revendications 1 à 4, **caractérisé en ce que** le circuit (4) de commande associé au circuit (2) de pompage a un diviseur (22) de fréquence qui est monté en aval du circuit (10) à oscillateur et qui applique deux signaux d'horloge antisymétriques aux deux entrées (8, 9) de pompage du circuit (2) de pompage.

7. Montage suivant l'une des revendications 1 à 7, **caractérisé en ce que** le circuit (2) de pompage a un circuit cascade composé de plusieurs étages ayant des condensateurs (41) qui sont reliés suivant un circuit série entre la sortie (1) de haute tension et la tension (V_{dd}) d'alimentation de façon à ce que les transistors (41) fonctionnant en diode forment une rangée qui sont couplés aux condensateurs (39, 40) couplés, aux points de couplage des transistors (41) fonctionnant en diode, alternativement, par le côté éloigné des transistors (41) fonctionnant en diode, aux deux entrées (8, 9) de pompage et **en ce que** le circuit de pompage a un autre transistor (42) qui est monté entre la tension (V_{dd}) d'alimentation et le circuit série composé des transistors (41), dont l'entrée de commande se trouve à la tension (V_{dd}) d'alimentation et qui est monté en réaction.

8. Montage suivant l'une des revendications 1 à 7, **caractérisé par** une constitution intégrée sur un substrat semi-conducteur.

9. Montage suivant l'une des revendications 1 à 8, **caractérisé en ce que** le circuit électronique de charge a un groupe de cellules de mémoire à programmer ou à effacer d'une mémoire à semi-conducteurs non volatile, pouvant être effacée électriquement et programmable.

10. Montage suivant l'une des revendications 1 à 9, **caractérisé en ce que** la valeur du signal (5) de commande correspond à la valeur à la tension (V_{dd}) d'alimentation.

11. Montage suivant l'une des revendications 1 à 10, **caractérisé en ce que** la valeur de la haute tension est de préférence d'environ +18 volt ou de -12 volt et la valeur de la tension (V_{dd}) d'alimentation est de préférence comprise entre environ +3 volt ±10 % et +5 volt ±10 %.
